Europäisches Patentamt

European Patent Office

Office européen des brevets

(11) Veröffentlichungsnummer : **0 049 481**
**B1**

(12) .EUROPÄISCHE PATENTSCHRIFT

(45) Veröffentlichungstag der Patentschrift :
20.08.86

(51) Int. Cl.⁴ : **G 05 D 23/24, F 24 D 19/10**

(21) Anmeldenummer : **81107797.3**

(22) Anmeldetag : **01.10.81**

(54) Elektronische Schaltung zum Verarbeiten von Sollwerten.

(30) Priorität : 02.10.80 DE 8026364 U

(43) Veröffentlichungstag der Anmeldung :
14.04.82 Patentblatt 82/15

(45) Bekanntmachung des Hinweises auf die Patenterteilung : 20.08.86 Patentblatt 86/34

(84) Benannte Vertragsstaaten :
AT BE CH DE FR GB IT LI LU NL SE

(56) Entgegenhaltungen :
EP-A- 0 007 497
DE-A- 2 710 871
ELEKTROWÄRME INTERNATIONAL, Band 34, Mai
1976, Seiten A119-A121, Essen, DE., H. DIEDRICH:
"Möglichkeiten und Auswirkungen unterschiedlicher
Betriebsweisen von Wärmepumpen"

(73) Patentinhaber : Joh. Vaillant GmbH u. Co.
Berghauser Strasse 40 Postfach 10 10 20
D-5630 Remscheid 1 (DE)
DE IT LU SE
COFRABEL N.V.
Goldenhopestraat 15
B-1620 Drogenbos (BE)
BE
VAILLANT S.A.R.L
4, Rue des Oliviers Orly-Sénia 326
F-94537 Rungis Cedex (FR)
FR
VAILLANT Ges.m.b.H
Forchheimergasse 7 Postfach 56
A-1233 Wien (AT)
AT
Vaillant Ltd.
Vaillant Building, Aerodrome Way Heston Industrial
Estate
GB-Hounslow, Middx. TW5 9QB (GB)
GB
SCHONEWELLE B.V.
Ellermanstraat 17
NL-1099 BX Amsterdam (NL)
NL
Vaillant GmbH
Riedstrasse 8
CH-8953 Dietikon 1 (CH)
CH LI

(72) Erfinder : Taag, Jürgen
Joachimstrasse 40
D-5630 Remscheid (DE)

(74) Vertreter : Heim, Johann-Ludwig, Dipl.-Ing.
c/o Joh. Vaillant GmbH u. Co Berghauser Strasse 40
Postfach 10 10 20
D-5630 Remscheid 1 (DE)

## Beschreibung

Die vorliegende Erfindung geht aus von einer elektronischen Schaltung gemäß dem Oberbegriff des Hauptanspruchs.

Es ist bereits bekannt, zur Speisung eines Verbrauchers, beispielsweise einer Sammelheizung und/oder eines Gebrauchswasserbereiters, sowohl eine Wärmepumpe als auch eine brennstoffbeheizte Wärmequelle vorzusehen. Bei der Wärmepumpe kann es sich sowohl um eine Kompressions- wie auch eine Absorptions- oder Resorptionswärmepumpe handeln. Die Kompressionswärmepumpe kann sowohl von einem Verbrennungsmotor als auch von einem Elektromotor betrieben sein. Die Wärmequelle kann ihrerseits aus einem gas- oder ölbeheizten Kessel bzw. Umlaufwasserheizer bestehen.

Bei solchen sogenannten bivalenten Systemen ist es relativ schwierig, die Grenztemperatur zu finden, bis zu der einerseits ein Wärmepumpenbetrieb ohne weiteres möglich ist und ab welcher andererseits ein ausschließlicher Betrieb der Wärmequelle zweckmäßig ist. Als zusätzliche Schwierigkeit tritt hierbei noch in Erscheinung, daß diese Grenztemperatur nicht nur außentemperaturabhängig ist, sondern vom System und dessen Arbeit zusätzlich abhängt.

Aus der EP-A-7 497 ist eine dem Oberbegriff des unabhängigen Anspruchs entsprechende Schaltung bekanntgeworden, bei der vom Ist-Wert der Raumtemperatur ausgehend, die Umschaltung zwischen einem Kessel und einer Wärmepumpe durchgeführt wird. Hierbei sind zwei Grenztemperaturschwellen vorgesehen, wobei die Wärmepumpe arbeitet, wenn die gefühlte Raumtemperatur die erste Schwelle überschreitet, während der Kessel angeschaltet wird, wenn die Raumtemperatur die zweite Schwelle überschreitet.

Bei der Erfindung geht es hingegen darum, eine Vielzahl von Sollwerten zu erfassen, die Regler der brennstoffbeheizten Wärmequelle beziehungsweise der Wärmepumpe mit den maßgeblichen Sollwerten zu versorgen und das Umschalten zu bewerkstelligen.

Der vorliegenden Erfindung liegt mithin die Aufgabe zugrunde, eine elektronische Schaltung zu schaffen, bei der das Umschalten vom Wärmepumpenbetrieb auf Kesselbetrieb in beiden Richtungen möglich ist und bei der nur die Sollwerte bzw. die Stellgrößen auf den Wärmepumpen- bzw. Kesselregler durchgeschaltet werden, die für den gerade angewählten Betrieb notwendig sind.

Die Lösung dieser Aufgabe gelingt erfindungsgemäß mit den kennzeichnenden Merkmalen des Hauptanspruchs.

Weitere besonders vorteilhafte Ausbildungen und Weiterbildungen der Erfindung sind Gegenstand der Unteransprüche sowie der nachfolgenden Beschreibung, die ein Ausführungsbeispiel der Erfindung anhand der Figuren eins und zwei näher erläutert.

Es bedeuten
Figur eins ein Blockschaltbild der elektronischen Schaltung und
Figur zwei die wesentlichen Details aus dem Blockschaltbild.

In beiden Figuren bedeuten gleiche Bezugszeichen jeweils die gleichen Einzelheiten.

Die elektronische Schaltung gemäß Figur eins weist eine Schaltuhr 1 auf, die über eine Leitung 2 mit einem Umschalter 3 verbunden ist und diesen nur zwischen zwei Kontakten 4 oder 5 schalten kann. Der Kontakt 4 ist mit einem internen Tag-Sollwertgeber 6, der Kontakt 5 mit einem internen Nacht-Sollwertgeber 7 verbunden.

Der Kontakt 3 ist seinerseits mit einem Eingang 8 eines Sollwert-Meßumformers 9 verbunden. Weitere Eingänge dieses Sollwert-Meßumformers 9 sind über eine Leitung 10 ein Außentemperaturfühler, über eine Leitung 12 ein externer Sollwertgeber 13 und über eine Leitung 14 ein weiterer externer Sollwertgeber in Form eines Raumtemperaturfühlers 15.

Ein Ausgang 16 des Sollwert-Meßumformers ist auf einen Eingang eines Sollwertbilders 17 geschaltet, dessen weiterer Eingang 18 mit einem Heizwert-Kurvengeber 19 verbunden ist. Ein Ausgang 20 des Sollwertbilders 17 ist mit einem Eingang eines Sollwertbegrenzers 21 verbunden, auf dessen weiterem Eingang 22 ein Maximal-Sollwertgeber 23 für den Wärmepumpenwert geschaltet ist. Ein Ausgang 24 des Sollwertbegrenzers ist auf einen Umschalter 25 — vergleiche Figur zwei — für die Umschaltung vom Wärmepumpen- auf Kesselbetrieb geführt.

Der Ausgang 20 ist über eine Leitung 26 mit Eingängen 27 eines Mischerreglers 28 und einem Eingang 29 für einen Wärmepumpen-Zweipunktregler 30 verbunden. Weiterhin führt die Leitung 26 zu einem Eingang 31 eines Sollwert-Minimumbegrenzers 32, dessen Ausgang einen Eingang 33 eines Kesselzweipunktreglers 34 bildet.

Ein Vorlauftemperaturfühler 35 ist über eine Leitung 36 auf einen Eingang eines Istwert-Meßumformers 37 geschaltet, dessen weiterer Eingang 38 von einem Rücklauftemperaturfühler 39 beaufschlagt ist. Ein Ausgang 40 des Istwert-Meßumformers ist mit Eingängen 41 des Mischerreglers 28 und 42 des Wärmepumpen-Zweipunktreglers 30 verbunden.

Ein weiterer Sollwertgeber 43 ist für die Minimal-Kesseltemperatur vorgesehen, sein Ausgang 44 bildet einen Eingang des Sollwert-Minimumbegrenzers 32.

Ein Kesseltemperaturfühler 45 bildet einen Eingang 46 eines weiteren Istwert-Meßumformers 47, der über einen Eingang 48 von einem Offsetgeber 49 beaufschlagt ist. Ein Ausgang 50 des Istwert-Meßumformers 47 bildet einen Eingang des Kesselzweipunktreglers 34.

Der Mischerregler 28 besitzt zwei Stelleitungen 51 und 52, der Wärmepumpen-Zweipunktregler weist eine Ausgangsstelleitung 53 und der Kessel-Zweipunktregler eine Ausgangsstelleitung 54 auf.

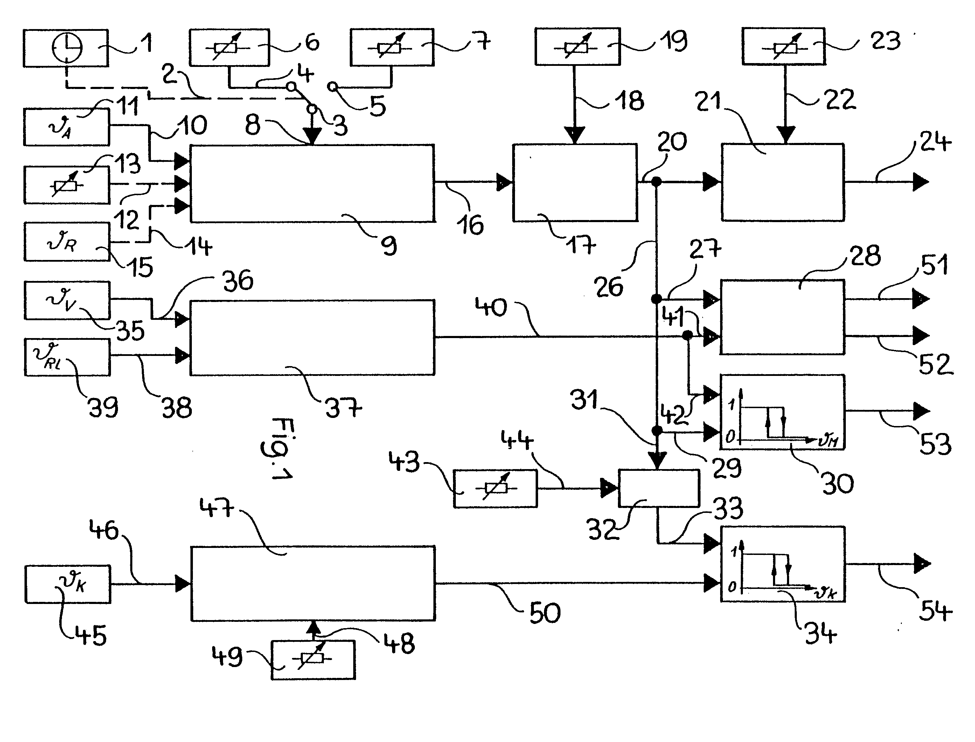

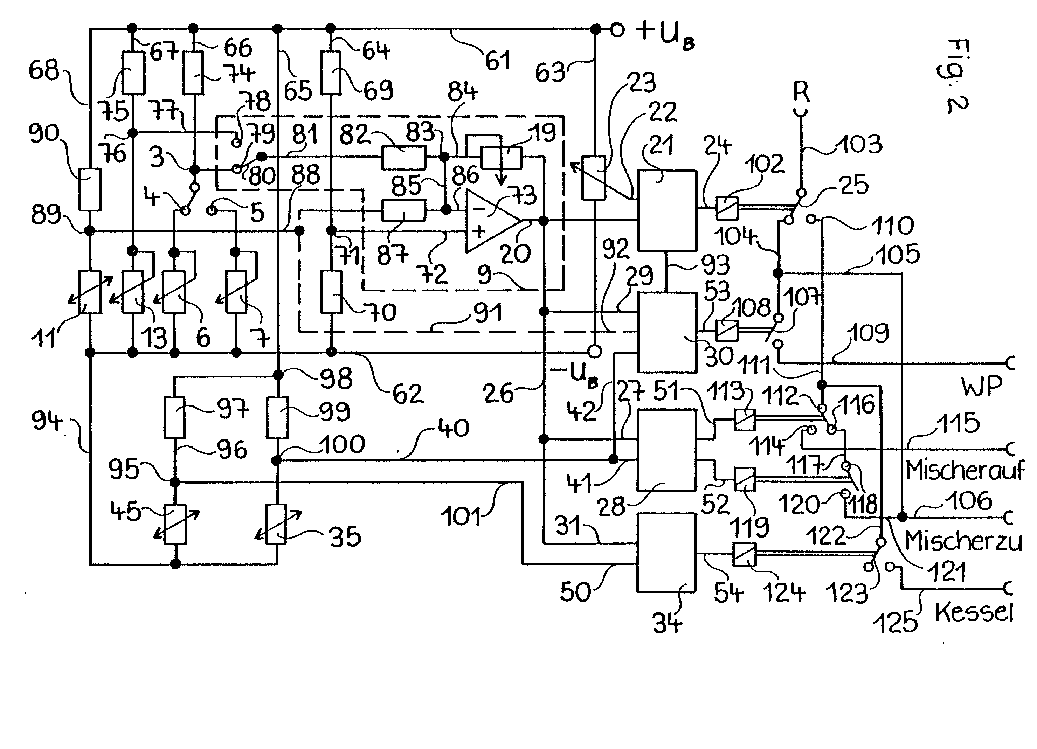

Aus der Figur zwei geht der Schaltplan des Blockschaltbildes detaillierter hervor.

Veränderungen bezüglich des Blockschaltbildes sind insoweit vorgenommen worden, als daß der Rücklauffühler 39 ersatzlos entfallen ist. Weiterhin ist der externe Sollwertgeber mit die Raumtemperaturfühler 15 entfallen.

Es zeigt sich, daß gemäß Figur zwei sämtliche Istwertgeber wie Kesselfühler 45, Vorlauftemperaturfühler 35, Außentemperaturfühler 11 als temperaturabhängige Widerstände in Form von NTC-Widerständen ausgebildet sind. Sämtliche Sollwertgeber wie 6, 7, 13, 23, 19 sind als einstellbare Potentiometer ausgebildet.

Ausgehend von einer Betriebsspannung $U_B$, deren positiver Pol an einer Leitung 61 und deren negativer Pol an einer Leitung 62 anliegen, sind die beiden Leitungen 61 und 62 über zueinander parallelliegenden Widerstandszweige 63, 64, 65, 66, 67 und 68 miteinander verbunden. Im Zweig 63 liegt der Maximal-Sollwertgeber 23 in Form des bereits erwähnten Potentiometers, dessen Schleifer die Leitung 22 bildet. Im Zuge des Zweiges 64 sind zwei Festwertwiderstände 69 und 70 vorgesehen, wobei der Verbindungspunkt 71 beider einen Eingang 72 eines Operationsverstärkers 73 bildet. Der Ausgang dieses Operationsverstärkers ist der Ausgang 20 und gleichermaßen der Eingang des Sollwertbegrenzers 21.

Im Zweig 66 liegt ein Widerstand 74, der mit dem Fußpunkt des Umschalters 3 verbunden ist. Der Umschalter liegt entweder auf dem Kontakt 4 oder 5, so daß sich der Zweig 66 entweder über den Sollwertgeber 6 oder den Sollwertgeber 7 zum Zweig 62 fortsetzt. Im Zuge des Zweiges 67 ist ein Festwertwiderstand 75 vorgesehen, der mit dem externen Sollwertgeber-Widerstand 13 in Serie liegt. Ein Verbindungspunkt zwischen beiden Widerständen 76 ist über eine Leitung 77 mit einem Kontakt 78 verbunden. Ein weiterer Kontakt 79 ist mit dem Fußpunkt des Kontaktes 3 verbunden. Von den Kontakten 78 und 79 kann über einen Umschalter 80 jeweils einer auf eine Leitung 81 geschaltet werden, in der ein Widerstand 82 liegt und die zu einer Verzweigung 83 führt. Von dem Verzweigungspunkt 83 geht eine Leitung 84 über den Heizkurven-Sollwertgeber 19 zum Ausgang 20. Eine weitere Leitung 85 führt zu einem Eingang 86 des Operationsverstärkers 73. Der Eingang 86 ist über einen Festwertwiderstand 87 mit einer Leitung 88 verbunden, die zu einem Verzweigungspunkt 89 führt. Der Verzweigungspunkt 89 ist über einen Festwertwiderstand 90 mit der Leitung 61 und über den Außentemperaturfühler 11 mit der Leitung 62 verbunden. Über eine Leitung 91 ist die Leitung 88 mit einem weiteren Eingang 92 des Wärmepumpen-Zweipunktreglers 30 verbunden.

Eine Stelleitung 93 führt vom Ausgang des Wärmepumpen-Zweipunktreglers 30 zum Sollwertbegrenzer 21.

Die Leitung 62 ist über eine Leitung 94 mit den einen Anschlüssen der beiden Istwertgeber 35 und 45 verbunden. Der Istwertgeber 45 ist mit einem Verzweigungspunkt 95 verbunden, von dem eine Leitung 96 über einen Festwertwiderstand 97 mit einem Verzweigungspunkt 98 verbunden ist. Der Verzweigungspunkt 98 führt über einen Festwertwiderstand 99 zu einem weiteren Verzweigungspunkt 100, der unmittelbar mit dem anderen Anschluß des Istwert-Gebers 35 verbunden ist. Der Verzweigungspunkt 95 ist über eine Leitung 101, die dem Ausgang des nicht weiter dargestellten Meßwertumformers 47 entspricht, mit dem einen Eingang des Kessel-Zweipunktreglers 34 verbunden. Der Verzweigungspunkt 100 entspricht dem Ausgang 40.

In der Ausgangsleitung 24 des Sollwert-Begrenzers 21 liegt ein von einer Spule 102 betätigter Umschalter 25, dessen Fußpunkt über eine Leitung 103 mit einer Netzklemme R verbunden ist. Der eine Kontakt des Umschalters 25, 104 ist über eine Leitung 105 mit einem Eingang 106 eines nicht weiter dargestellten Mischermotors verbunden, bei Stromspannungsbeaufschlagung des Eingangs 106 läuft der Mischer in seine Geschlossen-Stellung. Das bedeutet, daß der Kessel von der Sammelheizungsanlage getrennt wird.

Der Kontakt 104 ist über einen weiteren Kontakt 107 geführt, der von einer Spule 108 betätigbar ist, die dem Ausgang 53 zugeordnet ist. Bei dem Kontakt 107 handelt es sich um einen Arbeitskontakt. Die an ihn auf der anderen Seite angeschlossene Leitung 109 bewirkt beim Spannungsbeaufschlagen ein Inbetriebgehen der Wärmepumpe. Wärmepumpe bzw. Kessel werden über Puls-Pausen-Signale auf den Leitungen 109 bzw. 125 als Funktion der Soll-Ist-Vergleiche gesteuert.

Der andere Kontakt 110 des Umschalters 25 ist mit einer Leitung 111 verbunden, die zu einem Fußpunkt eines Kontaktes 112 führt. Dieser Kontakt ist einer Magnetspule 113 zugeordnet, die vom Ausgang 51 des Mischerreglers 28 abhängig ist. Der eine Kontakt 114 des Kontaktes 112 führt zu einem Eingang 115, der den bereits erwähnten Mischermotor beaufschlagt. Erscheint auf dem Eingang 115 Spannung, so läuft der Motor entgegengesetzt zu der Richtung an, die dem Eingang 106 zugeordnet ist, das heißt, der Mischer geht in Offen-Stellung. Das bedeutet, daß der Kessel mit der Heizungsanlage mehr oder minder verbunden ist. Der andere Kontakt 116 des Kontaktes 112 führt über eine Leitung 117 zu einem Fußpunkt 118 eines weiteren Kontaktes, der von einer Magnetspule 119 beherrscht ist, die dem Ausgang 52 zugeordnet ist. Bei diesem Kontakt handelt es sich gleichermaßen um einen Arbeitskontakt. Das Gegenstück 120 des Arbeitskontaktes ist mit einer Leitung 121 verbunden, die sowohl mit der Leitung 105 als auch mit dem Eingang 106 verbunden ist.

Die Leitung 111 ist mit einer Leitung 122 verbunden, die über einen Arbeitskontakt 123 geführt ist. Dieser Arbeitskontakt hängt von einer weiteren Magnetspule 124 ab, die dem Ausgang 54 zugeordnet ist. Der Arbeitskontakt 123 ist an eine Eingangsleitung 125 angeschaltet, die dem Kessel zugeordnet ist. Bei Spannungsbeaufschlagung des Eingangs 125 geht der Kessel in Betrieb.

Bei der Funktionsbeschreibung der Ausführungsbeispiele gemäß Figuren eins und zwei wird von einer Außentemperatur von +10 Grad C ausgegangen, so daß bei diesem Betriebszustand eine ausschließliche Speisung des als Radiatorheizung ausgebildeten Verbrauchers durch die Wärmepumpe stattfindet. Hierbei wird davon ausgegangen, daß die Umschalttemperatur vom Wärmepumpenbetrieb auf Kesselbetrieb entsprechend dem zum Einsatz kommenden Kältemittel bei + 3 Grad C liegt. Die Vorlauftemperatur für den Tagwert sei als Solltemperatur von 43 Grad C angenommen. Weiterhin sei angenommen, daß eine Umschaltung vom Wärmepumpen- auf Kesselbetrieb unabhängig vom Absolutwert der Außentemperatur bei einem Sollwert von 55 Grad C in der Vorlaufleitung stattfindet, wobei höheren Temperaturwerten der Kesselbetrieb zugeordnet ist. Liegt, was meistens der Fall ist, der Nachttemperatur-Sollwert unter dem Tagtemperatur-Sollwert, so wirkt sich das beim Wärmepumpenbetrieb nicht aus. Es ist aber durchaus möglich, daß die Umschalttemperatur in ihrem Wert zwischen dem Tag- und dem Nachttemperatursollwert liegt, dann muß unabhängig von der Außentemperatur bei dem niedrigen Nachtsollwert die Wärmepumpe und bei dem höheren Tagsollwert der Kessel arbeiten.

Fällt nunmehr unter den beschriebenen Eingangsvoraussetzungen die Außentemperatur, so steigt aufgrund der Heizkurvenzuordnung des Vorlauftemperaturwertes der Sollwert am Ausgang 20 an. Überschreitet dieser Sollwert den am Maximal-Sollwertgeber 23 eingestellten Sollwert, im angenommenen Beispiel also 55 Grad, so geht die Wärmepumpe außer Betrieb. Das kommt daher, daß der Ausgang 24 des Sollwertbegrenzers 21 stromführend wird und der Umschalter 25 von der Magnetspule 102 beaufschlagt wird. Somit ist R über die Leitung 103 mit 110 verbunden, das bedeutet, daß R auf der Leitung 122 ansteht. Das bedeutet aber weiterhin, daß je nach Stellung des Dreipunktreglers 28 entweder der Kontakt 114 oder Kontakt 116 oder keiner von beiden vom Fußpunkt 112 angesteuert ist. Der Mischer bewegt sich über die Leitungen 106 und 115 entweder in Auf- oder Schließrichtung oder bleibt stehen. Die Sollwerte werden im Mischerregler über die Leitung 26 parallel vorgegeben. Somit arbeitet der Kessel mit einer normalen Kesselvorlauftemperatur-Regelung. Die Wärmepumpe ist ausgeschaltet, der Wärmepumpen-Regler ist wirkungslos. Fällt die Außentemperatur weiter, so ändert sich an diesem beschriebenen Betriebszustand nichts. Steigt die Außentemperatur hingegen, so wird nach Erreichen des maximalen Wärmepumpen-Sollwertes der Kessel abgeschaltet und die Wärmepumpe in Betrieb geschaltet. Dieser Zustand kann nicht nur über steigende Außentemperatur, sondern auch über einen fallenden Sollwert erreicht werden, beispielsweise nach Wirksamwerden des für die Nacht geltenden Sollwertes. Wenn der Kessel abgeschaltet wird, geht der Umschalter 25 wieder in die dargestellte Lage zurück, das heißt, daß der Mischer-Dreipunktregler wirkungslos geschaltet ist. Das bedeutet aber, daß die vorgegebenen Sollwerte über die Leitung 29 dem Wärmepumpen-Zweipunktregler 30 aufgeschaltet werden, der somit seine Magnetspule 108 betätigt und den Kontakt 107 auf Schließen schaltet. Somit liegt R an der Wärmepumpe an, die in Betrieb gehen kann. Die eigentliche Wärmepumpenregelung, wie Druck des Kompressors, Durchsatz von Kältemittel usw., sind Gegenstand eigener Regelkreise im Internen der Wärmepumpe. In jedem Fall ist es zweckmäßig, die Wärmepumpe unabhängig von den gerade eingestellten Sollwerten bei einem bestimmten Istwert der Außentemperatur abschalten zu lassen, weil bei Unterschreiten einer bestimmten Außentemperatur eine gewinnbringende Funktion der Wärmepumpe nicht mehr gewährleistet ist. Das kann über die Leitung 91 und den dritten Eingang 92 des Wärmepumpenreglers erreicht werden. In diesem Falle resultiert auch ein Ausgangssignal auf der Leitung 93, so daß der Maximal-Sollwert-Geber entsprechend beaufschlagt wird.

**Patentansprüche**

1. Elektrische Schaltung zum Verarbeiten von Sollwerten — wie Heizkurve (Außentemperatur), Tag- und Nachtsollwert und gegebenenfalls externer Sollwert — mit Sollwerterfassungsgliedern und wenigstens zwei Stellgliedern, von denen eines eine Wärmepumpe und eine brennstoff- beziehungsweise strombeheizte Wärmequelle an einen wärmeaufnehmenden Verbraucher an- und abschaltet und deren zweites den Sollwert für die in Betrieb befindliche Wärmequelle führt, gekennzeichnet durch einen Sollwertbegrenzer (21), dessen Eingänge einmal ein außentemperaturabhängiger Umschaltwert und zum zweiten ein Korrekturumschaltwert entsprechend aller Sollwerterfassungsglieder (Tag-, Nacht-, externer Heizkurven-Sollwert) zugeführt ist und dessen Ausgang mit den Stellgliedern (102, 108, 113, 119 und 124) verbunden ist, wovon eines (102) einen Umschalter (25) für das Ausschalten der Wärmepumpe (WP) beziehungsweise der Wärmequelle (Kessel) aufweist, die anderen (108, 113, 119 und 124) nur den Sollwert für den Wärmepumpen-Regler beziehungsweise den Wärmequellen-Regler durchschaltet.

2. Elektrische Schaltung nach Anspruch eins, dadurch gekennzeichnet, daß der Wärmequellen-Regler aus einer Parallelschaltung eines Mischer- bzw. Kesselreglers besteht.

3. Elektrische Schaltung nach Anspruch eins oder zwei, dadurch gekennzeichnet, daß die Sollwertspannungen über Serienwiderstände parallel an einem Eingang eines dem Vergleicher vorgeschalteten Summationsgliedes anliegen.

4. Elektrische Schaltung nach Ansprüche eins bis drei, dadurch gekennzeichnet, daß eine Verriegelungsschaltung für den Umschalter von Wärmepumpen auf Wärmequellenbetrieb vorgesehen ist.

5. Elektrische Schaltung nach einem der Ansprüche eins bis vier, dadurch gekennzeichnet, daß die Außentemperatur direkt auf den Wärmepumpen-Regler geführt ist, um bei einer bestimmten Außentemperatur die Wärmepumpe abzuschalten.

## Claims

1. An electric circuit for processing desired values, such as the heating curve (outdoor temperature), desired day and night temperatures and, if desired, desired external temperatures, comprising elements for detecting desired values and at least two final control elements, one of which connects and disconnects a heat pump and a fuel-heated or electrically heated heat source to and from a heat-receiving consumer whereas the second final control element controls the desired value for the heat pump which is in operation, characterized by a desired-value limiter (21), which at its inputs receives a changeover value, which depends on the outdoor temperature, and a correcting change-over value, which corresponds to all desired-value detectors (desired values for day and night temperatures and external heating curve), whereas its output is connected to the final control elements (102, 108, 113, 119 and 124), one (102) of which comprises a change-over switch (25) for turning off the heat pump (WP) or the heat source (boiler) and the others (108, 113, 119 and 124) control merely the transmission of the desired-value signal to the controller for the heat pump or the controller for the heat source.

2. An electric circuit according to claim 1, characterized in that the controller for the heat source comprises a controller for a mixer and a controller for a boiler, which are connected in parallel.

3. An electric circuit according to claim 1 or 2, characterized in that the voltages which represent desired values are applied in parallel via series resistances to one input of a summator, which precedes the comparator.

4. An electric circuit according to claims 1 to 3, characterized in that an interlocking circuit is provided for the change-over switch for changing over between heat pump operation and heat source operation.

5. An electric circuit according to any of claims 1 to 4, characterized in that the outdoor temperature signal is directly applied to the controller for the heat pump so that the latter is deenergized at a predetermined outdoor temperature.

## Revendications

1. Montage électronique pour le traitement de consignes — telles que courbe de chauffage (température extérieure), consignes de jour et de nuit et éventuellement consigne externe — avec des organes enregistreurs de consignes et au moins deux organes de réglage dont l'un établit et coupe la liaison entre une thermopompe ou une source calorifique chauffée par un combustible ou le courant électrique, et un récepteur alimenté en chaleur, et dont l'autre pilote la consigne pour la thermopompe en marche, caractérisé par un limiteur de consignes (21) dont les entrées reçoivent d'une part une valeur de commutation en fonction de la température extérieure et, d'autre part, une valeur de correction correspondant à tous les organes enregistreurs de consignes (consignes de jour, de nuit, externe de courbe de chauffage), et dont la sortie est reliée aux organes de réglages (102, 108, 113, 119 et 124) dont l'un (102) comprend un commutateur (25) commandant l'arrêt de la thermopompe (WP) ou de la source calorifique (chaudière), et les autres (108, 113, 119 et 124) n'assurent la transmission de la consigne au régulateur de la thermopompe ou à celui de la source calorifique.

2. Montage électronique suivant la revendication un, caractérisé par le fait que le régulateur de la source calorifique se compose d'un montage en parallèle d'un régulateur de mélangeur ou de chaudière.

3. Montage électronique suivant la revendication un ou deux, caractérisé par le fait que les tensions de consigne sont appliquées, par l'intermédiaire de résistances série, parallèlement à une entrée d'un organe de sommation en amont de l'organe comparateur.

4. Montage électronique suivant les revendications un à trois, caractérisé par le fait qu'il est prévu un montage de verrouillage pour le commutateur commandant la commutation entre la thermopompe et la source calorifique.

5. Montage électronique suivant l'une des revendications un à quatre, caractérisé par le fait que la température extérieure agit directement sur le régulateur de la thermopompe pour en assurer l'arrêt à une température extérieure donnée.

Fig.1

$\vartheta_A$  11 10

$\vartheta_R$  15 14 12

$\vartheta_V$  35 36

$\vartheta_{Rl}$  39 38 37

$\vartheta_k$  45 46 47 49 48 50

1  2  6  4  5  7  8  3  9  16  17  18  19  20  26  21  22  23  24

27  28  51  52  41  40  42  31  29  30  53

43  44  32  33  34  54

0 049 481

Fig. 2